# EUROPÄISCHE PATENTSCHRIFT

(11) **EP 1 500 993 B1**
(45) Veröffentlichungstag und Bekanntmachung des Hinweises auf die Patenterteilung: **05.11.2008**
(21) Anmeldenummer: 04014798.5
(22) Anmeldetag: 24.06.2004
(51) Int. Cl.: G05B 19/042, G05B 19/4065, G05B 23/02, H04N 17/04

(54) **Elektrotechnisches Gerät mit einer Vorrichtung zur Bewertung des Einflusses von Betriebsparametern auf die Lebensdauer**
Electrotechnical apparatus with device to assess the influence of operational parameters on life of the apparatus
Appareil électrotechnique avec installation pour évaluer l'influence des paramètres d'opération sur la durée de vie

(30) Priorität: 26.06.2003 DE 10328794
(43) Veröffentlichungstag der Anmeldung: 26.01.2005
(73) Patentinhaber: Grundig Multimedia B.V., 1083 HJ Amsterdam (NL)
(72) Erfinder: Friebe, Markus, 90766 Fürth (DE); Fuhrmann, Andreas, 90427 Nürnberg (DE)
(74) Vertreter: Pröll, Jürgen

(56) Entgegenhaltungen:
- EP-A2- 0 930 603
- WO-A-92/04665
- GB-A- 2 193 453
- US-A1- 2002 128 728

## Beschreibung

Die Erfindung betrifft ein elektrotechnisches Gerät der Unterhaltungselektronik mit einer Einrichtung zur Bewertung des Einflusses von Betriebsparametern auf die Lebensdauer.

Bei elektrotechnischen Geräten mit wenigstens einem elektrischen Verbraucher hängt die durchschnittliche Lebensdauer der elektrotechnischen Geräte in den meisten Fällen von Betriebsparametern ab, die im Rahmen des bestimmungsgemäßen Gebrauchs der elektrotechnischen Geräte durch die jeweilige Bedienperson beeinflussbar sind. Unter dem Begriff "durchschnittliche Lebensdauer" wird dabei der Zeitraum verstanden, innerhalb dessen es bei normalem Gebrauch der elektrotechnischen Geräte in aller Regel zu keinen Defekten an wichtigen Gerätekomponenten kommt.

Durch die oft zahlreichen Einstellungsmöglichkeiten an solchen Geräten tritt häufig das Problem auf, dass die von der jeweilige Bedienperson gewählten Geräteeinstellungen die Lebensdauer der Geräte negativ beeinflussen, ohne die Performance nennenswert zu erhöhen. Besonders häufig ist dies bei Geräten der Unterhaltungselektronik der Fall, weil diese Geräte zumeist von technischen Laien benutzt werden, die sich oft nicht die Mühe machen die Bedienungsanleitung zu lesen.

Beim Vorliegen von Betriebsbedingungen, bei denen es zu einer Zerstörung von Geräteteilen kommen kann, sind deshalb üblicherweise Überwachungseinrichtungen vorgesehen, die eine Überlastabschaltung, eine automatische Korrektur der Einstellungen, oder eine Alarmierung der Bedienperson vornehmen.

Aus der DE-A-198 00 846 ist bereits eine Vorrichtung zur Vermeidung einer Überhitzung eines Display treiber-Bausteins eines Plasmadisplays bekannt. Der Display treiber-Baustein weist mehrere Displaytreiber-Elemente auf, von denen jedes einem Bildbereich des auf dem Display dargestellten Bildes zugeordnet ist. Weiterhin weist die Vorrichtung eine Messeinheit zur Erzeugung eines Messsignals auf, welches eine Information über die Leistungsaufnahme des Displays enthält. Die Messeinheit ist ausgangsseitig mit einer Steuersignalerzeugungseinheit verbunden, welche ein Steuersignal zur Reduzierung der Helligkeit der auf dem Display dargestellten Bildsignale erzeugt. Die Steuersignalerzeugungseinheit ist zur Ermittlung eines bildbereichsweisen Messsignals vorgesehen, um ein die Helligkeit der auf dem Display dargestellten Signale reduzierendes Steuersignal dann zu erzeugen, wenn eines der Display treiber-Elemente einer übermäßigen Belastung ausgesetzt ist.

Die DE-PS-197 54 804 betrifft eine Vorrichtung zur Kühlung eines Displays mit einem Ventilator zur Erzeugung einer das Display kühlenden Luftströmung, einem Temperaturfühler zur Erfassung der im Bereich des Displays herrschenden Temperatur und einer ausgangsseitig mit dem Temperaturfühler verbundenen Steuersignalerzeugungseinheit zur Erzeugung eines Steuersignals für den Ventilator. Weiterhin weist die Vorrichtung eine Schaltung zur Auswertung des dem Display zugeführten Videosignals auf. Diese ist ausgangsseitig mit der Steuersignalerzeugungseinheit verbunden. Die Steuersignalerzeugungseinheit erzeugt das Steuersignal für den Ventilator unter Berücksichtigung des Ausgangssignals der Schaltung zur Auswertung des dem Display zugeführten Videosignals.

Aus der DE-A-197 56 653 ist eine Vorrichtung zur Vermeidung einer Überhitzung eines Plasmadisplays bekannt, die eine Messeinheit zur Erzeugung einer Information über die Leistungsaufnahme des Displays aufweist und ausgangsseitig mit einer Steuersignalerzeugungseinheit zur Erzeugung eines Steuersignals verbunden ist. Das Steuersignal beaufschlagt eine Schaltung zur Reduzierung der Helligkeit der auf dem Display dargestellten Bildsignale. Weiterhin weist die Vorrichtung einen Temperaturfühler zur Erfassung der im Bereich des Displays herrschenden Temperatur auf, dessen Ausgangssignal zur Erzeugung des genannten Steuersignals beiträgt.

Die DE-A-35 17 342 beschreibt einen Leistungsverstärker mit mehreren Endstufen, wobei auf dem gemeinsamen Kühlelement ein temperaturempfindliches Bauteil angeordnet ist, das mit einer Schwellwertschaltung verbunden ist, die bei Überschreiten einer vorgegebenen Temperatur einen Teil der Endstufen abschaltet.

Weiterhin ist es aus der EP-B-0 596 208 bekannt, bei einem Audio-Verstärker nach einer erfolgten thermischen Sicherheitsabschaltung automatisch beim wieder Einschalten die Lautstärke zu reduzieren.

Aus GB 2193453-A1 sind ein Verfahren und eine Vorrichtung zur Überwachung des Zustandes eines Werkzeuges bekannt. Ein Schneidwerkzeug wird während des Betriebes bzw. online dadurch überwacht, indem die Wärmeentstehung an der Schneidkante gemessen und diese zum Zustand der Schneidkante in Beziehung gesetzt wird.

Eine Strömung eines Kühlmittels kontaktiert die rückseitige Oberfläche des Schneidwerkzeuges, und der Anstieg der Kühlmitteltemperatur wird während des Bearbeitungsprozesses gemessen. Temperaturdifferenz und ihr Anstiegs- oder Abfallgeschwindigkeit ist eine direkte Anzeige der Wärmeerzeugungsgeschwindigkeit und steht in Beziehung zu Werkzeugzuständen wie beispielsweise übermäßige und schnelle Abnutzung und Bruch.

Im Fall von Einsetzen sind Kühlmittelkanäle in dem wiederverwendeten Sitz ausgebildet, und Kühlmittelkanäle sorgen für eine Strömung des Kühlmittels zum Sitz.

Betriebszustände, die weder eine Abschaltung wegen der drohenden Zerstörung von Geräteteilen, noch eine automatische Anpassung von Betriebsparametern oder eine Alarmierung der Bedienperson erforderlich machen, weil sie im zulässigen Bereich liegen, haben dennoch häufig einen negativen Einfluss auf die Lebensdauer des jeweiligen Gerätes. Dies bleibt aber der Bedienperson verborgen, so dass eine entsprechende Korrektur der Geräteinstellungen unterbleiben wird.

Ausgehend von diesem Stand der Technik liegt der Erfindung die Aufgabe zugrunde, elektrotechnische Geräte so auszubilden, dass die jeweilige Bedienperson von Betriebszuständen Kenntnis erhält, die die Lebensdauer der Geräte negativ beeinflussen, so dass diese in die Lage gesetzt wird, durch entsprechende Eingriffe in die Geräteeinstellungen den ungünstigen Betriebszustand aufzuheben und damit die Lebensdauer der elektrotechnischen Geräte zu erhöhen.

Die Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass durch die Auswertung eines messtechnisch erfassten, die Lebensdauer des Gerätes beeinflussenden Betriebsparameters, auch solche Betriebszustände zu einer Information der Bedienperson führen, die zwar im zulässigen Bereich liegen, aber dennoch einen negativen Einfluss auf die Lebensdauer des elektrotechnischen Gerätes haben. Dies kann initiiert durch die Bedienperson oder besonders vorteilhaft automatisch dann erfolgen, wenn ein negativer Einfluss auf die Lebensdauer ermittelt wurde.

Weiterhin ist es von Vorteil, die Bedienperson nicht nur über das Vorliegen eines die Lebensdauer negativ beeinflussenden Betriebszustandes zu informieren sondern, wie in einer Ausgestaltung der Erfindung gezeigt, gleichzeitig Maßnahmen zur Beseitigung dieses Betriebszustandes zu empfehlen.

Zu einer möglichst gezielten Maßnahmenempfehlung kann es darüber hinaus vorteilhaft sein, weitere Betriebsgrößen des Gerätes, die den Betriebsparameter beeinflussen, messtechnisch zu erfassen, um im Wege einer Analyse die geeignetsten Maßnahmen zur Beeinflussung des Betriebsparameters zu ermitteln.

Weitere vorteilhafte Eigenschaften der Erfindung ergeben sich aus deren beispielhafter Erläuterung anhand der Figuren.

Es zeigt:
- Fig. 1: eine Skizze eines Fernsehempfängers gemäß der Erfindung;
- Fig. 2a bis 2c: Bildschirmeinblendungen bei einem erfindungsgemäßen Fernsehgerät.

Als Beispiel für ein elektrotechnisches Gerät wird nachfolgend ein Fernsehgerät zur näheren Beschreibung der Erfindung herangezogen, weil gerade in Verbindung mit Geräten der Unterhaltungselektronik von den Bedienpersonen gravierende Fehler in der Bedienung gemacht werden, die zu einem vorzeitigen Ausfall der Geräte führen.

Die Lebensdauer von Fernsehgeräten hängt von sehr vielen unterschiedlichen Einflüssen ab, die zu einem großen Teil von der Bedienperson beeinflussbar sind. So hat z.B. schon der Aufstellungsort und die damit verbundene Beeinflussung der Betriebstemperatur einen gravierenden Einfluss auf die Lebensdauer des Gerätes. Entsprechendes gilt für die Umgebungshelligkeit, die Orientierung des Bildschirms zu Lichtquellen oder den am Aufstellungsort herrschenden Umgebungsgeräuschpegel, um nur einige zu nennen.

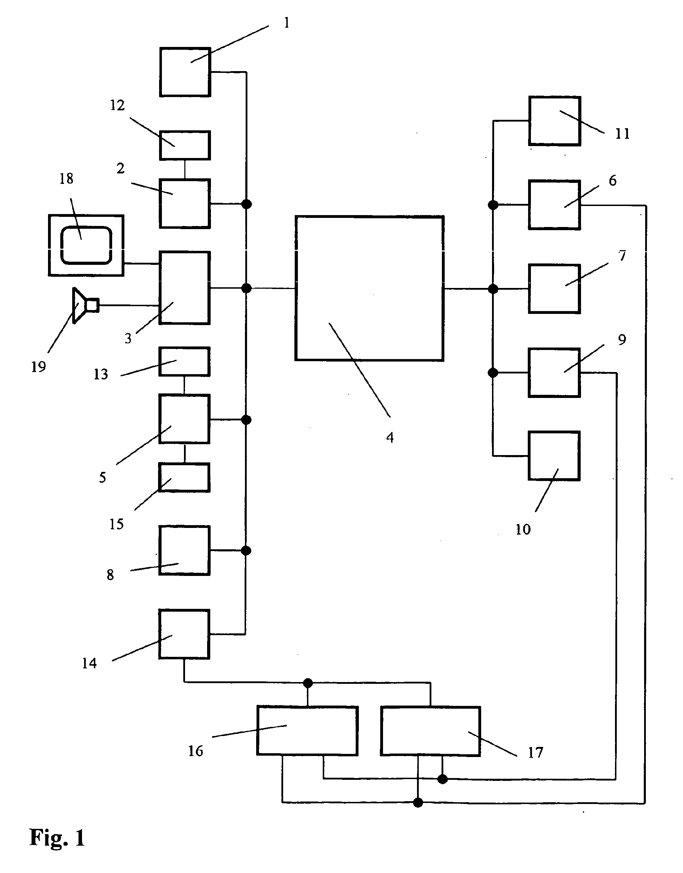

Wie nun die Ausgestaltung eines erfindungsgemäßen Fernsehgerätes aussehen kann, soll nachfolgend unter Zuhilfenahme der Figur 1 näher erläutert werden. Das in Figur 1 gezeigte Blockschaltbild enthält dabei nur die Komponenten des Fernsehgerätes, die für das Verständnis der Erfindung wichtig sind.

Wie bereits weiter oben angesprochen, ist eine wesentliche Einflussgröße für die Lebensdauer eines Fernsehgerätes die Betriebstemperatur, es ist deshalb eine Messeinrichtung 1 vorgesehen, die die Betriebstemperatur des Gerätes während des Betriebes aufnimmt. Die jeweilige Betriebstemperatur wird, gesteuert durch eine Steuereinrichtung 4, von einer Auswerteeinrichtung 2 ausgewertet. Zur Auswertung bedient sich die Auswerteeinrichtung 2 eines ersten Speichers 12, in dem für bestimmte Betriebstemperaturen der jeweilige Einfluss der Betriebstemperaturen auf die Lebensdauer gespeichert ist. Die Auswerteeinrichtung 2 vergleicht also die mittels der Messeinrichtung 1 ermittelte Betriebstemperatur mit den im ersten Speicher 12 gespeicherten Betriebstemperaturen und entnimmt bei Übereinstimmung eine der jeweiligen gespeicherten Betriebstemperatur zugeordnete Information, die Auskunft über den Einfluss auf die Lebensdauer des Gerätes gibt, diesem Speicher 12. Mittels der Steuereinheit 4 wird die so ermittelte Information einer Meldeeinrichtung 3 übergeben, die diese über den Bildschirm 18 oder den Lautsprecher 19 des Fernsehgerätes ausgibt. Wie dies geschieht, wird später noch näher erläutert.

Nachdem die Bedienperson mit dem bloßen Hinweis einer negativen Beeinflussung der Lebensdauer unter Umständen nichts anfangen kann, sondern auch Informationen darüber benötigt, wie diese negative Beeinflussung wieder aufgehoben werden kann, ist es sinnvoll, das Fernsehgerät mit einer Analyseeinrichtung 5 auszustatten, die z. B. anhand von Geräteeinstellungen und der über die Messeinrichtung 1 erfassten Betriebstemperatur ermittelt, auf welche Weise der die Lebensdauer negativ beeinflussende Betriebszustand verändert werden kann. Dazu bedient sich die Analyseeinrichtung eines zweiten Speichers 13, in dem Informationen über entsprechende Maßnahmen zur Beeinflussung gespeichert sind und übergibt diese, gesteuert durch die Steuereinheit 4, der Meldeeinrichtung 3, mittels der die Ausgabe an die Bedienperson über den Bildschirm 18 oder den Lautsprecher 19 erfolgt.

Bezüglich des Zeitpunktes, zu dem die Betriebstemperatur erfasst, ausgewertet und eine entsprechende Information zur Anzeige gebracht wird, kann vorgesehen sein, dass dies initiiert durch die Bedienperson über Eingabemittel 7 erfolgt. Dabei können die Eingabemittel 7 z.B. die heute übliche Fernbedienung eines Fernsehgerätes sein. Selbstverständlich ist es auch möglich, die Erfassung der Betriebstemperatur, deren Auswertung und die Ausgabe der Information automatisch, gesteuert durch die Steuereinheit 4, vorzunehmen, wobei die Ausgabe insbesondere dann erfolgt, wenn eine negative Beeinflussung der Lebensdauer durch die Betriebstemperatur gegeben ist. Beide Formen, die Information über die Beeinflussung der Lebensdauer zur Anzeige zu bringen, können selbstverständlich nebeneinander realisiert sein. Die jeweiligen Hinweise auf die Beeinflussung der Lebensdauer sind, wie bereits ausgeführt, vorzugsweise mit Hinweisen zu verbinden, die es der Bedienperson erlauben, bezüglich des die Lebensdauer negativ beeinflussenden Betriebszustandes Abhilfe zu schaffen.

Nachdem, wie bereits ausgeführt, der mit der Messeinrichtung 1 erfasste Betriebsparameter durch eine ganze Anzahl unterschiedlicher Betriebsgrößen beeinflusst werden kann, ist es für eine möglichst präzise Ermittlung der Abhilfemaßnahmen sinnvoll, weitere Messeinrichtungen im oder am Fernsehgerät vorzusehen. Nach dem Beispiel in Fig. 1 ist eine Messeinrichtung 14 vorgesehen, die die Leistungsaufnahme der Bildschirmansteuereinheit 16 sowie die Leistungsaufnahme der Audioendstufe 17 ermittelt. Mit Hilfe der Analyseeinheit 5 kann so, gesteuert durch die Steuereinheit 4 und unter Zuhilfenahme eines mit der Analyseeinheit 5 verbundenen Speichers 15, ermittelt werden, ob die erhöhte Betriebstemperatur durch eine entsprechende Belastung der Bildschirmansteuereinheit 16 oder der Audioendstufe 17 bedingt ist. Zutreffendenfalls wird dann von der Analyseeinheit 5 aus dem Speicher 13 ein entsprechender Hinweis ausgelesen und gesteuert durch die Steuereinheit 4 über die Meldeeinrichtung 3 auf dem Bildschirm 18 oder über den Lautsprecher 19 ausgegeben. Die Darstellung auf dem Bildschirm kann dabei z.B. als alphanumerische oder graphische Einblendung in das normale Fernsehbild erfolgen, für die Ausgabe über den Lautsprecher 19 ist mittels eines entsprechenden Sprachmoduls (nicht dargestellt) die auszugebende Information in synthetische Sprache umzusetzen oder aus einem Speicher, als dort gespeicherte Sprachaufzeichnung, auszulesen.

Neben der vorstehend beschriebenen Leistungserfassung der Bildschirmansteuereinheit 16 bzw. der Audioendstufe 17 ist es denkbar, durch am Fernsehgerät oder im Fernsehgerät angeordnete weitere Messeinrichtungen (nicht dargestellt) die Umgebungstemperatur, die Zulufttemperatur, die Ablufttemperatur, den Kühlluftdurchsatz, die Umgebungshelligkeit, die auf dem Bildschirm auftreffende Lichtstärke oder den Umgebungsgeräuschpegel zu messen. Alle genannten Messgrößen können dann zur Feststellung der genauen Ursache des unerwünschten Betriebszustandes durch die Analyseeinheit 5 herangezogen werden. So ist es beispielsweise möglich, durch eine Auswertung der Umgebungstemperatur und des Kühlluftdurchsatzes zu ermitteln, ob durch eine ungünstige Platzierung des Fernsehgerätes in einer Schrankwand oder durch das Ablegen von Gegenständen auf dem Fernsehgerät, Lüftungsschlitze ganz oder teilweise abgedeckt sind, so dass eine ordnungsgemäße Gerätebelüftung nicht möglich ist.

Gleichermaßen lässt sich durch eine Erfassung der Umgebungshelligkeit in Verbindung mit einer festgestellten starken Belastung der Bildschirmansteuereinheit 16 ein entsprechender Bedienhinweis generieren, wie in Sinne einer Lebensdaueroptimierung zu verfahren ist.

Als weitere Möglichkeit kann vorgesehen sein, dass über die Eingabeeinheit 7 durch die Bedienperson ein Bereich eingebbar ist, innerhalb dessen der Einfluss auf die Lebensdauer variieren darf, wobei dann, bei Überschreiten dieses definierten Bereiches, durch die Analyseeinheit 5 in Verbindung mit der Steuereinheit 4 und der Meldeeinheit 3 ein entsprechender Hinweis an die Bedienperson über den Bildschirm 18 oder den Lautsprecher 19 generiert wird. Bei einer drastischen Abweichung kann dabei weiter vorgesehen sein, dass über eine zusätzliche Alarmeinheit 8 ein entsprechender Alarm ausgelöst wird und/oder dass über eine entsprechende Abschalteinrichtung 9 eine Abschaltung z.B. der Bildschirmansteuereinheit 16, der Audioendstufe 17 oder des gesamten Gerätes erfolgt.

Um der Bedienperson die zur Lebensdaueroptimierung notwendigen Eingriffe in der Gerätesteuerung abzunehmen besteht die Möglichkeit, Steuermittel 6 vorzusehen, mittels derer die Analyseeinheit 5 im Verbindung mit der Steuereinheit 4 Geräteeinstellung selbständig im Sinne einer Lebensdaueroptimierung verändert. So kann beispielsweise über die Steuermittel 6 die Bildschirmansteuereinheit 16 im Sinne einer Reduzierung der Bildhelligkeit beeinflusst werden. Desgleichen können die Steuermittel 6 die Audioendstufe 17 durch eine entsprechende Reduzierung der Lautstärke entlasten.

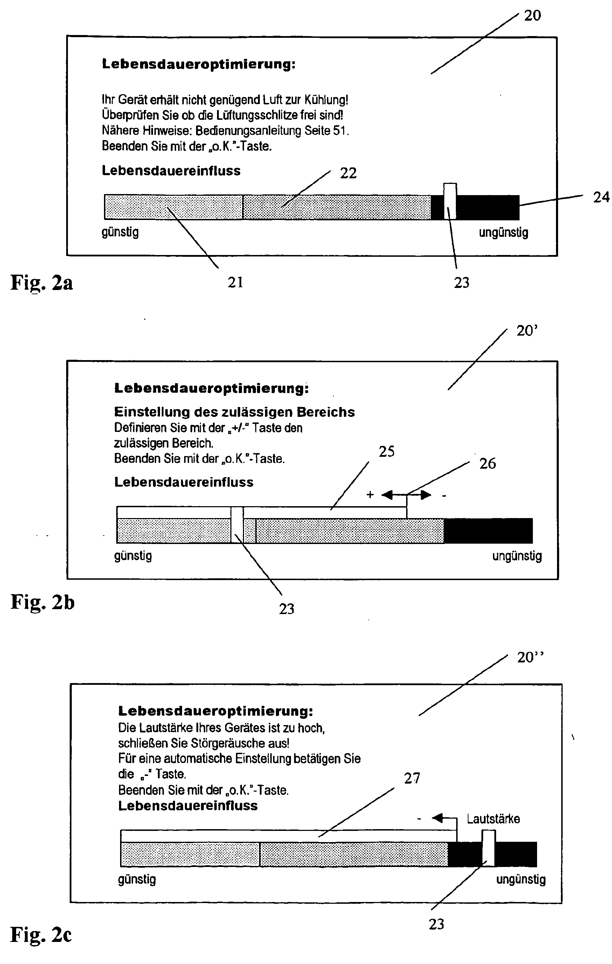

Zur Verdeutlichung der Möglichkeiten, die sich bei erfindungsgemäß ausgestatteten Geräten für die Bedienperson ergeben, werden nachfolgend an Hand der Figuren 2a bis 2c Beispiele für bildschirmgestützte Dialoge gezeigt, wie sie sich zur Lebensdaueroptimierung bei Fernsehgeräten ergeben können.

Figuren 2a bis 2c zeigen ein Bildschirmeinblendungen 20, 20', 20" wie sie bei heute üblichen Fernsehgeräten zur bildschirmgestützten Einstellung unterschiedlichster Funktionen des Gerätes verwendet werden. Die Bildschirmeinblendung kann auf Anforderung der Bedienperson über die Fernbedienung erfolgen, wie im Beispiel nach Fig. 2b oder automatisch dann erfolgen, wenn eine ungünstige Beeinflussung der Lebensdauer gegeben ist, entsprechende Fälle sind in den Figuren 2a und 2c dargestellt.

In dem Beispiel nach Fig. 2a hat die Steuereinheit 4 durch die oben beschriebenen Mess- und Vergleichs- und Analyseschritte festgestellt, dass die zu hohe Betriebstemperatur aufgrund zu geringer Luftzirkulation im Fernsehgerät entstanden ist. Die Steuereinheit 4 veranlasst daraufhin die Bildschirmeinblendung, die ihren Zweck, nämlich "Lebensdaueroptimierung" und den Grund der Einblendung sowie die Maßnahme zur Beseitigung des Grundes alphanumerisch benennt. Der ebenfalls in der Bildschirmeinblendung enthaltene Hinweis auf die Beeinflussung der Lebensdauer ist grafisch aufbereitet und zeigt in Balkenform den Einfluss des benannten Problems auf die Lebensdauer. Der Balken ist zur Verdeutlichung in einen günstigen Bereich 21, einen neutralen Bereich 22 und einen ungünstigen Bereich 24 unterteilt und mit einer Marke 23 versehen, die den momentanen Einfluss der Betriebsweise des Gerätes auf die Lebensdauer zeigt. Durch die detaillierten Hinweise ist die Bedienperson in der Lage das Problem zu erkennen und die Ursache zu beseitigen.

Um der Bedienperson eine Einflussmöglichkeit einzuräumen ist in Fig. 2b eine Möglichkeit aufgezeigt, den Bereich, innerhalb dessen der Einfluss auf die Lebensdauer variieren kann, zu definieren. In einer Bildschirmeinblendung 20', die von der Bedienperson über die bekannte Menü-Struktur eines Fernsehgerätes mittels der Fernbedienung aufrufbar ist, wird die Möglichkeit der Einstellung und die Vorgehensweise dabei alphanumerisch benannt. In einem grafischen Teil ist der Balken aus Fig. 2a mit den Einflussbereichen auf die Lebensdauer gezeigt, die Marke 23 macht den momentanen Einfluss der Geräteeinstellungen auf die Lebensdauer kenntlich. Der zulässige Bereich 25 ist als paralleler Balken dargestellt und mit einem Indikator 26 versehen, der aufzeigt, dass durch entsprechende Eingabe über die "+/-"- Taste eine Veränderung des zulässigen Bereiches 25 möglich ist. Die Bedienperson ist damit in der Lage selbst zu bestimmen, wie "sensibel" die Lebensdaueroptimierung ansprechen soll.

Eine Möglichkeit das aufgetretene Problem automatisch zu beseitigen ist in Fig. 2c dargestellt. Dort ist eine Bildschirmeinblendung 20" gezeigt, die wiederum den Grund für die Einblendung, nämlich "Lebensdaueroptimierung", das aufgetretene Problem, im Beispiel "Die Lautstärke Ihres Gerätes ist zu hoch, schließen Sie Störgeräusche aus!" alphanumerisch benennt. Wie bereits oben ausgeführt, lässt sich diese Aussage aus der festgestellten zu hohen Gerätetemperatur, der festgestellten hohen Leistungsaufnahme der Audioendstufe und gegebenenfalls dem erfassten Umgebungsgeräuschpegel durch die oben beschriebenen Mess-, Vergleichs- und Analyseschritte gewinnen. In einem weiteren Teil der Bildschirmeinblendung 20" ist der Balken für die grafische Verdeutlichung des Einflusses auf die Lebensdauer, wie er bereits in Verbindung mit der Fig. 2a beschrieben ist, angeordnet. Die Marke 23 zeigt, dass der momentane Einfluss auf die Lebensdauer des Gerätes im ungünstigen Bereich liegt. Als paralleler Balken ist die Ursache der Einblendung, nämlich die zu hohe Lautstärke kenntlich gemacht. Zur automatischen Abhilfe wird im alphanumerischen Teil der Bildschirmeinblendung 20" angeboten durch das Betätigen der "-" -Taste die Einstellung automatisch zu korrigieren. Die Korrektur erfolgt wie bereits beschrieben durch entsprechendes Zusammenwirken der Steuereinheit 4 mit den Steuermitteln 6.

Nachdem fehlerhafte Geräteeinstellungen, die in Folge zu einem vorzeitigen Ausfall der Geräte führen, häufig darauf zurückzuführen sind, dass die Bedienperson entweder die Bedienungsanleitung des Gerätes nicht liest oder entsprechende Hinweise in der Bedienungsanleitung ignoriert, kann es weiter sinnvoll sein, einen Speicher 10 vorzusehen, der werterhaltend und vorzugsweise schwer zerstörbar ausgebildet ist, um in einem solchen Speicher 10 die an die Bedienperson ausgegebenen Meldungen zu protokollieren. Kommt es zum Ausfall des Gerätes oder zur Zerstörung, lässt sich dann mit dem Inhalt des Speichers 10 die Schuldfrage klären.

In Verbindung mit dem Beispiel wurde hinsichtlich des die Lebensdauer beeinflussenden Betriebsparameters auf die Betriebstemperatur zurückgegriffen, selbstverständlich ist es denkbar, dass es sich dabei auch um eine andere Größe handeln kann. Insbesondere ist es weiterhin auch möglich, mehrere derartige Betriebsparameter zur erfassen, um auch bei komplexen Systemen, insbesondere solchen die bautechnisch in unterschiedliche Einheiten aufgegliedert sind, eine entsprechende Lebensdaueroptimierung vornehmen zu können.

Die Anwendbarkeit der Erfindung auf unterschiedlichste Arten von elektrotechnischen Geräten impliziert, dass den vorstehend in Verbindung mit einem Fernsehgerät beschriebenen Maßnahmen selbstverständlich nur Beispielcharakter zukommt, dem Fachmann ist klar, dass, abhängig vom Gerätetyp, durch die Messeinrichtung 1 unterschiedlichste die Lebensdauer der Geräte bestimmende Betriebsparameter zu erfassen sind, entsprechend gilt natürlich auch, dass diese Betriebsparameter durch unterschiedlichste Betriebsgrößen beeinflusst werden, so dass für deren Erfassung auch unterschiedlichste Messeinrichtungen vorzusehen sind. Dies beeinflusst aber die grundsätzliche Ausgestaltung der erfindungsgemäßen elektrotechnischen Geräte nicht.

Weiterhin besteht natürlich die Möglichkeit, die in Verbindung mit dem Beispiel beschriebene Auswerteeinrichtung 2, die Meldeeinrichtung 3, die Analyseeinrichtung 5, usw., in die Steuereinrichtung 4 zu integrieren, derartige Steuereinrichtungen sind als mikrocomputergesteuerte Systeme dem Fachmann bekannt.

Schließlich ist noch anzuführen, dass selbstverständlich der erste Speicher 12 der zweite Speicher 13 und der dritte Speicher 15 Teile eines gemeinsamen Speichers sein können.

Die vorstehend beschriebenen Maßnahmen zur Ausgestaltung eines erfindungsgemäßen elektrotechnischen Gerätes können selbstverständlich einzeln oder parallel oder eventuell durch weitere Maßnahme ergänzt realisiert werden, die Ausgestaltung wird dabei wesentlich von der Art des elektrotechnischen Gerätes abhängen.

## Patentansprüche

1. Elektrotechnisches Gerät der Unterhaltungselektronik, mit wenigstens einem elektrischen Verbraucher, wobei die durchschnittliche Lebensdauer des elektrotechnischen Gerätes der Unterhaltungselektronik in Abhängigkeit zu wenigstens einem messtechnisch erfassbaren, im Rahmen des bestimmungsgemäßen Gebrauch des elektrotechnischen Gerätes der Unterhaltungselektronik beeinflussbaren Betriebsparameters seht und wobei das elektrotechnische Gerät der Unterhaltungselektronik
- eine Messeinrichtung (1) enthält, die diesen wenigstens einen Betriebsparameter messtechnisch erfasst,
- eine Auswerteeinrichtung (2) enthält, die den Einfluss des wenigstens einen messtechnisch erfassten Betriebsparameters auf die Lebensdauer auswertet,
- eine Meldeeinrichtung (3) enthält, die den ermittelten Einfluss des wenigstens einen messtechnisch erfassten Betriebsparameters auf die Lebensdauer an eine Bedienperson ausgibt,
- eine Steuereinrichtung (4) enthält, welche die Erfassung des Betriebsparameters, die Auswertung des Betriebsparameters und die Ausgabe an die Bedienperson steuert.

2. Elektrotechnisches Gerät, nach Anspruch 1,
**dadurch gekennzeichnet, dass**
die Erfassung des Betriebsparameters, die Auswertung des Betriebsparameters und die Ausgabe an die Bedienperson durch Eingabe eines Befehls, über auf die Steuereinrichtung (4) wirkende Eingabemittel (7), durch die Bedienperson initiierbar ist.

3. Elektrotechnisches Gerät, nach Anspruch 1,
**dadurch gekennzeichnet, dass**
die Erfassung des Betriebsparameters, die Auswertung des Betriebsparameters und die Ausgabe an die Bedienperson durch die Steuereinrichtung (4) automatisch erfolgt.

4. Elektrotechnisches Gerät, nach Anspruch 3,
**dadurch gekennzeichnet, dass**
die Ausgabe an die Bedienperson durch die Steuereinrichtung (4) automatisch dann erfolgt, wenn die Auswerteeinrichtung (2) einen negativen Einfluss auf die Lebensdauer ermittelt hat.

5. Elektrotechnisches Gerät, nach Anspruch 1,
**dadurch gekennzeichnet, dass**
das elektrotechnische Gerät eine Analyseeinrichtung (5) enthält, die ermittelt durch welche Maßnahmen der wenigstens eine messtechnisch erfasste Betriebsparameter im Sinne einer Lebensdauerverlängerung beeinflussbar ist und dass die ermittelten Maßnahmen über die Meldeeinrichtung (3) an die Bedienperson ausgegeben werden.

6. Elektrotechnisches Gerät, nach einem der vorhergehenden Ansprüche,
**dadurch gekennzeichnet, dass**
das elektrotechnische Gerät Steuermittel (6) enthält, die eine Beeinflussung des Betriebsparameters ermöglichen.

7. Elektrotechnisches Gerät, nach einem der vorhergehenden Ansprüche,
**dadurch gekennzeichnet, dass**
die Ausgabe über die Meldeeinrichtung (3) optisch und/oder akustisch erfolgt.

8. Elektrotechnisches Gerät, nach einem der vorhergehenden Ansprüche,
**dadurch gekennzeichnet, dass**
die Ausgabe über die Meldeeinrichtung (3) alphanumerisch erfolgt.

9. Elektrotechnisches Gerät, nach einem der vorhergehenden Ansprüche,
**dadurch gekennzeichnet, dass**
die Ausgabe über die Meldeeinrichtung (3) grafisch erfolgt.

10. Elektrotechnisches Gerät, nach einem der vorhergehenden Ansprüche,
**dadurch gekennzeichnet, dass**
die Ausgabe über die Meldeeinrichtung (3) als Sprachausgabe über einen Lautsprecher (19) erfolgt.

11. Elektrotechnisches Gerät, nach einem der vorhergehenden Ansprüche,
**dadurch gekennzeichnet, dass**
die Auswerteeinrichtung (2) ermittelt, ob der Einfluss des wenigstens einen messtechnisch erfassten Betriebsparameters auf die Lebensdauer innerhalb eines zulässigen Bereiches liegt.

12. Elektrotechnisches Gerät, nach Anspruch 11,
**dadurch gekennzeichnet, dass**
Eingabemittel (7) vorgesehen sind, mittels derer der zulässige Bereich von der Bedienperson eingebbar ist.

13. Elektrotechnisches Gerät, nach Anspruch 11 oder 12,
**dadurch gekennzeichnet, dass**
die Auswerteeinrichtung (2) dann, wenn der Einfluss des wenigstens einen messtechnisch erfassten Betriebsparameters auf die Lebensdauer außerhalb des zulässigen Bereiches liegt, eine Alarmmeldung generiert und über die Meldeeinrichtung (3) an die Bedienperson ausgibt.

14. Elektrotechnisches Gerät, nach Anspruch 11 oder 12,
**dadurch gekennzeichnet, dass**
die Steuereinrichtung (4) dann, wenn der Einfluss des wenigstens einen messtechnisch erfassten Betriebsparameters auf die Lebensdauer außerhalb des zulässigen Bereiches liegt, das elektrotechnische Gerät abschaltet.

15. Elektrotechnisches Gerät, nach einem der vorhergehenden Ansprüche,
**dadurch gekennzeichnet, dass**
die Steuereinrichtung (4) wenigstens die letzte an die Bedienperson ausgegebene Meldung, die den Einfluss des wenigstens einen messtechnisch erfassten Betriebsparameters auf die Lebensdauer betrifft, in einem werterhaltenden Speicher (10) speichert.

16. Elektrotechnisches Gerät, nach einem der vorhergehenden Ansprüche,
**dadurch gekennzeichnet, dass**
eine Abrufvorrichtung (11) enthalten ist, bei deren Betätigung die Steureinrichtung (4) die Erfassung des Betriebsparameters, die Auswertung des Betriebsparameters und die Ausgabe an die Bedienperson durchführt.

17. Elektrotechnisches Gerät, nach einem der vorhergehenden Ansprüche,
**dadurch gekennzeichnet, dass**
- der Betriebsparameter die Betriebstemperatur des Gerätes ist,
- das elektrotechnische Gerät wenigstens einen elektrischen Verbraucher (16, 17) enthält, dessen Energieverbrauch die Betriebstemperatur beeinflusst,
- als Messeinrichtung (1) ein Temperatursensor zur Erfassung der Betriebstemperatur enthalten ist,
- die Auswerteeinrichtung (2) den Einfluss der erfassten Betriebstemperatur auf die Lebensdauer auswertet,
- die Meldeeinrichtung (3) den Einfluss der erfassten Betriebstemperatur auf die Lebensdauer an eine Bedienperson meldet.

18. Elektrotechnisches Gerät, nach Anspruch 17,
**dadurch gekennzeichnet, dass**
- die Auswerteeinrichtung (2) einen ersten Speicher (12) enthält, in dem für bestimmte Betriebstemperaturen der jeweilige Einfluss der Betriebstemperatur auf die Lebensdauer gespeichert ist,
- die Analyseeinrichtung (5) einen zweiten Speicher (13) enthält, in dem für bestimmte Betriebstemperaturen unterschiedliche Maßnahmen für die Beeinflussung der Betriebstemperatur gespeichert sind,
- die Auswerteeinrichtung (2) in Abhängigkeit von der jeweils erfassten Betriebstemperatur eine erste Meldung über den Einfluss auf die Lebensdauer aus dem ersten Speicher (12) ausliest, und an die Meldeeinrichtung (3) übergibt,
- die Analyseeinrichtung (5) eine zweite Meldung über die Maßnahme für die Beeinflussung der Betriebstemperatur aus dem zweiten Speicher (13) ausliest und an die Meldeeinrichtung übergibt,
- die Meldeeinrichtung (3) die erste und die zweite Meldung an die Bedienperson ausgibt.

19. Elektrotechnisches Gerät, nach einem der vorhergehenden Ansprüche,
**dadurch gekennzeichnet, dass**
- wenigstens eine weitere Messanordnung (14) vorgesehen ist, die wenigstens eine den Betriebsparameter beeinflussenden Betriebsgröße messtechnisch erfasst,
- die Analyseeinrichtung (5) ermittelt, ob der Betriebsparameter durch die wenigstens eine Betriebsgröße wesentlich beeinflusst ist und gegebenenfalls aus einem dritten Speicher (15) eine Maßnahme zur Beeinflussung des Betriebsparameters ausliest und an die Meldeeinrichtung (3) übergibt.
- die Meldeeinrichtung (3) die Maßnahme an die Bedienperson ausgibt.

20. Elektrotechnisches Gerät, nach Anspruch 19,
**dadurch gekennzeichnet, dass**
die Betriebsgröße die elektrische Leistung des wenigstens einen Verbrauchers (16, 17) ist.

21. Elektrotechnisches Gerät, nach Anspruch 19,
**dadurch gekennzeichnet, dass**
die Betriebsgröße die Umgebungstemperatur des elektrotechnischen Gerätes ist.

22. Elektrotechnisches Gerät, nach Anspruch 19,
**dadurch gekennzeichnet, dass**
die Betriebsgröße die Zulufttemperatur des elektrotechnischen Gerätes ist.

23. Elektrotechnisches Gerät, nach Anspruch 19,
**dadurch gekennzeichnet, dass**
die Betriebsgröße die Ablufttemperatur des elektrotechnischen Gerätes ist.

24. Elektrotechnisches Gerät, nach Anspruch 19,
**dadurch gekennzeichnet, dass**
die Betriebsgröße der Kühlluftdurchsatz durch das elektrotechnische Gerät ist.

25. Elektrotechnisches Gerät, nach einem der vorhergehenden Ansprüche,
**dadurch gekennzeichnet, dass**
das elektrotechnische Gerät ein Fernsehgerät ist.

26. Elektrotechnisches Gerät, nach Anspruch 25,
**dadurch gekennzeichnet, dass**
die Ausgabe der Meldung die den ermittelten Einfluss des wenigstens einen messtechnisch erfassten Betriebsparameters auf die Lebensdauer an eine Bedienperson aufzeigt und /oder die Ausgabe der Maßnahmen die aufzeigen, wie der wenigstens eine messtechnisch erfasste Betriebsparameter im Sinne einer Lebensdauerverlängerung beeinflussbar ist, mittels der Meldeeinrichtung (3) über den Bildschirm (18) des Fernsehgerätes erfolgt.

27. Elektrotechnisches Gerät, nach Anspruch 26,
**dadurch gekennzeichnet, dass**
die Ausgabe der Meldung in Form einer Einblendung in das Fernsehbild erfolgt.

## Claims

1. Electrical engineering device of consumer electronics, with at least one electrical load, the average lifetime of the electrical engineering device of consumer electronics depending on at least one operational parameter which can be captured by measurement, and can be affected during use of the electrical engineering device of consumer electronics as specified, and the electrical engineering device of consumer electronics containing
- a measuring device (1), which captures this at least one operational parameter by measurement,
- an evaluation device (2), which evaluates the effect of the at least one operational parameter which is captured by measurement on the lifetime,
- a reporting device (3), which outputs the determined effect of the at least one operational parameter which is captured by measurement on the lifetime to an operator,
- a control device (4), which controls the capture of the operating parameter, the evaluation of the operating parameter and the output to the operator.

2. Electrical engineering device according to Claim 1,
**characterized in that**
the capture of the operating parameter, the evaluation of the operating parameter and the output to the operator can be initiated by the operator entering a command, via input means (7) which act on the control device (4).

3. Electrical engineering device according to Claim 1,
**characterized in that**
the capture of the operating parameter, the evaluation of the operating parameter and the output to the operator are done automatically by the control device (4) .

4. Electrical engineering device according to Claim 3,
**characterized in that**
the output to the operator is done automatically by the control device (4) if the evaluation device (2) has determined a negative effect on the lifetime.

5. Electrical engineering device according to Claim 1,
**characterized in that**
the electrical engineering device contains an analysis device (5), which determines by what means the at least one operational parameter which is captured by measurement can be affected to extend the lifetime, and that the determined actions are output via the reporting device (3) to the operator.

6. Electrical engineering device according to one of the preceding claims,
**characterized in that**
the electrical engineering device contains control means (6), which make it possible to affect the operational parameters.

7. Electrical engineering device according to one of the preceding claims,
**characterized in that**
the output via the reporting device (3) takes place visually and/or acoustically.

8. Electrical engineering device according to one of the preceding claims,
**characterized in that**
the output via the reporting device (3) takes place alphanumerically.

9. Electrical engineering device according to one of the preceding claims,
**characterized in that**
the output via the reporting device (3) takes place graphically.

10. Electrical engineering device according to one of the preceding claims,
**characterized in that**
the output via the reporting device (3) takes place as speech output via a loudspeaker (19).

11. Electrical engineering device according to one of the preceding claims,
**characterized in that**
the evaluation device (2) determines whether the effect of the at least one operational parameter which is captured by measurement on the lifetime is within a permitted range.

12. Electrical engineering device according to Claim 11,
**characterized in that**
input means (7), by means of which operator can enter the permitted range, are provided.

13. Electrical engineering device according to Claim 11 or 12,
**characterized in that**
when the effect of the at least one operational parameter which is captured by measurement on the lifetime is outside the permitted range, the evaluation device (2) generates an alarm report and outputs it to the operator via the reporting device (3) .

14. Electrical engineering device according to Claim 11 or 12,
**characterized in that**
when the effect of the at least one operational parameter which is captured by measurement on the lifetime is outside the permitted range, the control device (4) switches off the electrical engineering device.

15. Electrical engineering device according to one of the preceding claims,
**characterized in that**
the control device (4) stores at least the last report which was output to the operator, concerning the effect of the at least one operational parameter which is captured by measurement on the lifetime, in a value-retaining memory (10).

16. Electrical engineering device according to one of the preceding claims,
**characterized in that**
it includes a retrieval device (11), and when this is activated the control device (4) carries out the capture of the operational parameter, the evaluation of the operational parameter and the output to the operator.

17. Electrical engineering device according to one of the preceding claims,
**characterized in that**
- the operational parameter is the operating temperature of the device,
- the electrical engineering device contains at least one electrical load (16, 17), the energy consumption of which affects the operating temperature,
- as the measuring device (1), a temperature sensor to capture the operating temperature is included,
- the evaluation device (2) evaluates the effect of the captured operating temperature on the lifetime,
- the reporting device (3) reports the effect of the captured operating temperature to an operator.

18. Electrical engineering device according to Claim 17,
**characterized in that**
- the evaluation device (2) contains a first memory (12), in which, for specified operating temperatures, the effect of the operating temperature on the lifetime is stored,
- the analysis device (5) contains a second memory (13), in which, for specified operating temperatures, different actions for affecting the operating temperature are stored,
- the evaluation device (2), depending on the captured operating temperature, reads out a first report about the effect on the lifetime from the first memory (12), and passes it to the reporting device (3),
- the analysis device (5) reads out a second report about the action to affect the operating temperature from the second memory (13) and passes it to the reporting device,
- the reporting device (3) outputs the first and second reports to the operator.

19. Electrical engineering device according to one of the preceding claims,
**characterized in that**
- at least one further measuring arrangement (14), which captures, by measurement, at least one operational magnitude which affects the operational parameter, is provided,
- the analysis device (5) determines whether the operational parameter is significantly affected by the at least one operational magnitude, and if appropriate reads out an action to affect the operational parameter from a third memory (15) and passes it to the reporting device (3),
- the reporting device (3) outputs the action to the operator.

20. Electrical engineering device according to Claim 19,
**characterized in that**
the operational magnitude is the electrical power of the at least one load (16, 17).

21. Electrical engineering device according to Claim 19,
**characterized in that**
the operational magnitude is the ambient temperature of the electrical engineering device.

22. Electrical engineering device according to Claim 19,
**characterized in that**
the operational magnitude is the supply air temperature of the electrical engineering device.

23. Electrical engineering device according to Claim 19,
**characterized in that**
the operational magnitude is the exhaust air temperature of the electrical engineering device.

24. Electrical engineering device according to Claim 19,
**characterized in that**
the operational magnitude is the cooling air throughput through the electrical engineering device.

25. Electrical engineering device according to one of the preceding claims,
**characterized in that**
the electrical engineering device is a television set.

26. Electrical engineering device according to Claim 25,
**characterized in that**
the report which indicates to an operator the determined effect of the at least one operational parameter which is captured by measurement on the lifetime, and/or the actions which indicate how the at least one operational parameter which is captured by measurement can be affected to extend the lifetime, are output by means of the reporting device (3) via the screen (18) of the television set.

27. Electrical engineering device according to Claim 26,
**characterized in that**
the report is output by being superimposed on the television picture.

## Revendications

1. Appareil électrotechnique de l'électronique de divertissement, comportant au moins un consommateur électrique, dans lequel la durée de vie moyenne de l'appareil électrotechnique de l'électronique de divertissement est en fonction d'au moins un paramètre de fonctionnement pouvant être détecté techniquement par mesure et dans le cadre de l'utilisation déterminée de l'appareil électrotechnique de l'électronique de divertissement et dans lequel l'appareil électrotechnique de l'électronique de divertissement
- comprend un dispositif de mesure (1), qui détecte techniquement par mesure au moins ce paramètre de fonctionnement,
- comprend un dispositif d'évaluation (2), qui évalue une influence d'au moins un paramètre de fonctionnement détecté techniquement par mesure sur la durée de vie,
- comprend un dispositif de signalisation (3), qui délivre à un utilisateur l'influence détectée d'au moins un paramètre de fonctionnement détecté techniquement par mesure sur la durée de vie,
- comprend un dispositif de commande (4), qui commande la détection du paramètre de fonctionnement, l'évaluation du paramètre de fonctionnement et la délivrance à l'utilisateur.

2. Appareil électrotechnique selon la revendication 1, **caractérisé en ce que** la détection du paramètre de fonctionnement, l'évaluation du paramètre de fonctionnement et la délivrance à l'utilisateur par saisie d'une instruction, par l'intermédiaire d'un moyen de saisie (7) agissant sur le dispositif de commande (4), peuvent être initiées par l'utilisateur.

3. Appareil électrotechnique selon la revendication 1, **caractérisé en ce que** la détection du paramètre de fonctionnement, l'évaluation du paramètre de fonctionnement et la délivrance à l'utilisateur sont effectuées automatiquement par le dispositif de commande (4).

4. Appareil électrotechnique selon la revendication 3, **caractérisé en ce que** la délivrance à l'utilisateur est effectuée automatiquement par le dispositif de commande (4), lorsque le dispositif d'évaluation (2) a détecté une influence négative sur la durée de vie.

5. Appareil électrotechnique selon la revendication 1, **caractérisé en ce que** l'appareil électrotechnique comporte un dispositif d'analyse (5), qui peut être influencé au sens d'un prolongement de la durée de vie par au moins le paramètre de fonctionnement déterminé techniquement par mesure détecté par ces mesures et **en ce que** les mesures détectées sont délivrées à l'utilisateur par l'intermédiaire du dispositif de signalisation (3).

6. Appareil électrotechnique selon l'une des revendications précédentes, **caractérisé en ce que** l'appareil électrotechnique comporte des moyens de commande (6), qui permettent une influence du paramètre de fonctionnement.

7. Appareil électrotechnique selon l'une des revendications précédentes, **caractérisé en ce que** la délivrance par l'intermédiaire du dispositif de signalisation (3) est effectuée optiquement et/ou acoustiquement.

8. Appareil électrotechnique selon l'une des revendications précédentes, **caractérisé en ce que** la délivrance par l'intermédiaire du dispositif de signalisation (3) est effectuée alphanumériquement.

9. Appareil électrotechnique selon une revendication précédente, **caractérisé en ce que** la délivrance par l'intermédiaire du dispositif de signalisation (3) est effectuée graphiquement.

10. Appareil électrotechnique selon l'une des revendications précédentes, **caractérisé en ce que** la délivrance par l'intermédiaire du dispositif de signalisation (3) en tant que sortie vocale est effectuée par l'intermédiaire d'un haut-parleur (19).

11. Appareil électrotechnique selon l'une des revendications précédentes, **caractérisé en ce que** le dispositif d'évaluation (2) détermine si l'influence du paramètre de fonctionnement détecté techniquement par mesure sur la durée de vie se trouve à l'intérieur d'une zone admissible.

12. Appareil électrotechnique selon la revendication 11, **caractérisé en ce que** des moyens de saisie (7) sont prévus, grâce auxquels la zone admissible peut être saisie par l'utilisateur.

13. Appareil électrotechnique selon la revendication 11 ou 12, **caractérisé en ce que**, lorsque l'influence du paramètre de fonctionnement détecté techniquement par mesure sur la durée de vie se trouve à l'extérieur de la zone admissible, le dispositif d'évaluation génère un message d'alarme et le délivre par l'intermédiaire du dispositif de signalisation (3) à l'utilisateur.

14. Appareil électrotechnique selon la revendication 11 ou 12, **caractérisé en ce que** le dispositif de commande (4) coupe l'appareil électrotechnique, lorsque l'influence du paramètre de fonctionnement détecté techniquement par mesure se trouve à l'extérieur de la zone admissible.

15. Appareil électrotechnique selon l'une des revendications précédentes, **caractérisé en ce que** le dispositif de commande (4) mémorise dans une mémoire conservant les valeurs (10) au moins le dernier message délivré à l'utilisateur, qui concerne l'influence du au moins un paramètre de fonctionnement détecté techniquement par mesure sur la durée de vie.

16. Appareil électrotechnique selon l'une de revendications précédentes, **caractérisé en ce qu'**un dispositif d'appel (11) est compris, grâce à l'actionnement duquel le dispositif de commande (4) effectue la détection du paramètre de fonctionnement, l'évaluation du paramètre de fonctionnement et la délivrance à l'utilisateur.

17. Appareil électrotechnique selon l'une des revendications précédentes, **caractérisé en ce que**
- le paramètre de fonctionnement est la température de fonctionnement de l'appareil,
- l'appareil électrotechnique comprend au moins un consommateur électrique (16, 17), dont la consommation d'énergie influence la température de fonctionnement,
- un capteur de température pour détecter la température de fonctionnement est compris en tant que dispositif de mesure (1),
- le dispositif d'évaluation (2) évalue l'influence de la température de fonctionnement détectée sur la durée de vie,
- le dispositif de signalisation (3) signale à un utilisateur l'influence de la température de fonctionnement détectée sur la durée de vie.

18. Appareil électrotechnique selon la revendication 17, **caractérisé en ce que**
- le dispositif d'évaluation (2) contient une première mémoire (12), dans laquelle l'influence respective de la température de fonctionnement sur la durée de vie est mémorisée pour des températures de fonctionnement déterminées,
- le dispositif d'analyse (5) contient une seconde mémoire (13), dans laquelle différentes mesures pour l'influence de la température de fonctionnement sont mémorisées pour des températures de fonctionnement déterminées,
- le dispositif d'évaluation (2) extrait de la première mémoire (12) un premier message concernant l'influence sur la durée de vie selon la température de fonctionnement détectée respective, et le délivre au dispositif de signalisation (3),
- le dispositif d'analyse (5) extrait de la seconde mémoire (13) un second message concernant les mesures pour l'influence de la température de fonctionnement et le délivre au dispositif de signalisation,
- le dispositif de signalisation (3) délivre le premier et le second messages à l'utilisateur.

19. Appareil électrotechnique selon l'une des revendications précédentes, **caractérisé en ce que**
- au moins un autre agencement de mesure (14) est prévu, qui détecte techniquement par mesure au moins une grandeur de fonctionnement influençant le paramètre de fonctionnement,
- le dispositif d'analyse (5) détermine, si le paramètre de fonctionnement est influencé principalement par la au moins une grandeur de fonctionnement et le cas échéant extrait une mesure pour l'influence du paramètre de fonctionnement d'une troisième mémoire (15) et la délivre au dispositif de signalisation (3),
- le dispositif de signalisation (3) délivre la mesure à l'utilisateur.

20. Appareil électrotechnique selon la revendication 19, **caractérisé en ce que** la grandeur de fonctionnement est la capacité électrique du au moins un consommateur (16,17).

21. Appareil électrotechnique selon la revendication 19, **caractérisé en ce que** la grandeur de fonctionnement est la température ambiante de l'appareil électrotechnique.

22. Appareil électrotechnique selon la revendication 19, **caractérisé en ce que** la grandeur de fonctionnement est la température de ventilation de l'appareil électrotechnique.

23. Appareil électrotechnique selon la revendication 19, **caractérisé en ce que** la grandeur de fonctionnement est la température d'évacuation de l'appareil électrotechnique.

24. Appareil électrotechnique selon la revendication 19, **caractérisé en ce que** la grandeur de fonctionnement est la transmission de l'air de refroidissement à travers l'appareil électrotechnique.

25. Appareil électrotechnique selon l'une des revendications précédentes, **caractérisé en ce que** l'appareil électrotechnique est un téléviseur.

26. Appareil électrotechnique selon la revendication 25, **caractérisé en ce que** la délivrance du message qui annonce à l'utilisateur l'influence déterminée du au moins un paramètre de fonctionnement détecté techniquement par mesure sur la durée de vie et/ou la délivrance des mesures qui montrent, comment le au moins un paramètre de fonctionnement détecté techniquement par mesure peut être influencé dans le sens d'une prolongation de la durée de vie, est effectuée grâce au dispositif de signalisation (3) par l'intermédiaire de l'écran (18) du téléviseur.

27. Appareil électrotechnique selon la revendication 26, **caractérisé en ce que** la délivrance du message est effectuée sous la forme d'une incrustation dans l'image du téléviseur.
